(19) **Europäisches Patentamt**
**European Patent Office**
**Office européen des brevets**

(11) **EP 2 544 407 A1**

(12) # EUROPEAN PATENT APPLICATION

(43) Date of publication:
**09.01.2013 Bulletin 2013/02**

(51) Int Cl.:
**H04L 12/26** (2006.01)

(21) Application number: **11172803.6**

(22) Date of filing: **06.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Tektronix International Sales GmbH 8212 Neuhausen (CH)**

(72) Inventors:
  • **Chatzis, Nikolaos**
    **10779 Berlin (DE)**

  • **Pujol, Enric**
    **12047 Berlin (DE)**
  • **Zseby, Tanja**
    **10999 Berlin (DE)**
  • **Kyas, Othmar**
    **12209 Berlin (DE)**
  • **Winau, Martin**
    **14089 Berlin (DE)**

(74) Representative: **Hofstetter, Schurack & Partner Patent- und Rechtsanwälte Balanstrasse 57 81541 München (DE)**

(54) ## Method and Device for Analysing a Communication Network

(57) The invention relates to a method for analysing a communication network, wherein the data transmitted in the communication network between a first and a second instance are organized in flows, wherein the data of a flow are transmitted in at least one packet, wherein each flow and thus the packets of each flow are assigned a flow identification number, wherein the packets of a flow are captured at an interface of the communication network between the first and the second instance, wherein the following steps are comprised: a) determining at least one selection condition for selecting flows the data of which are to be made available for the analysis; b) capturing of data at an interface by way of: b1) checking whether the current packet belongs to a flow that fulfils the at least one selection condition; b2) in case the checking in step b1) is answered in the affirmative: storing the current packet according to a pre-determinable sampling function; b3) repeating the steps b1) and b2) until occurrence of a termination condition; c) making data available at an interface; d) analyzing the data made available. The invention is further related to a corresponding device for performing such method.

Fig.1

EP 2 544 407 A1

## Description

The present invention relates to a method and a device for analysing a communication network.

In recent years, sampling has become an integral part of passive network measurement, and as an immediate consequence a great deal of attention and investment has been directed at understanding sampling theory and exploring its potential. This has been motivated by the need to reduce the amount of measured data under incrementing traffic rates and the demand for detailed measurements from network operators and service providers. The reduction of the amount of measured data has been in turn driven by the need to control the consumption of processing and storage resources in the measurement infrastructure, limit the network bandwidth that is consumed for transmitting measured data from the measurement infrastructure to the collection points, and eliminate the requirement for sophisticated and costly computing systems for efficiently analyzing and storing measured data. Nevertheless, simple one-stage random sampling methods or filtering techniques as known in the prior art are not always suitable for specific analysis goals. This is because the information loss they imply limits the level of detail at which network operators and service providers can characterize the state of a network, the demands of traffic and consumption of network resources, and the performance experienced by traffic on the network.

As to further prior art in connection with the present invention reference is made to B. Jenkins, "A Hash Function for Hash Table Lookup", [Online] [Last retrieved: 26 January 2011], http://www.burtleburtle.net/bob/hash/doobs.html, C. Henke, C. Schmoll and T. Zseby, "Empirical evaluation of hash functions for multipoint measurements", In SIGCOMM Computer Communication Review, vol. 38 (3), pp. 39-50, ACM, 2008, and A. Kumar and J. Xu, "Sketch Guided Sampling — Using On-Line Estimates of Flow Size for Adaptive Data Collection", In the Proceedings of IEEE INFOCOM, IEEE, 2006. Further, general information with regard to TCP may be gathered from the specifications RFC 793, RFC 1071, RFC 1122, RFC 1323, RFC 2018, RFC 2581 and RFC 3168, with regard to UDP from RFC 768. Technical information on the architecture, protocols and services in mobile networks can be found in the specifications proposed by 3rd Generation Partnership Project (3GPP): "3GPP TS 23.060: General Packet Radio Service (GPRS); Service description: V10.4.0 (2011-06)" and "3GPP TS 29060 GPRS: General Packet Radio Service (GPRS): Tunnelling Protocol (GTP) across the Gn and Gp interface, V10.2.0, (2011-06)".

The task of the present invention consists in further developing the initially named method and the initially named device in such a way that the measuring of various quantities of interest according to the needs of network operators and service providers can be improved.

This task is solved by means of a method having the features of patent claim 1 and a device having the features of patent claim 22.

The present invention is based on the insight that an improvement of the measuring of various quantities of interest according to the needs of network operators and service providers is possible, when biased sampling and filtering are combined. A specific sampling as it is used in the present invention serves for selecting such flows for analysis that are particularly relevant as to network technology, i.e. have certain characteristics that are indicative of errors. The term "flow" as it is used in the present invention concerns unidirectional flows. Further, in a preferred embodiment filtering and sampling are performed on the user traffic (GTP-U packets) that is transmitted from (and to) the Radio Network Controller (RNC), across the lu-PS interface, via the Serving GPRS Support Node (SGSN), across the Gn interface, to (and from) the Gateway GPRS Support Node (GGSN). Socalled "uplink flows" are flows that first traverse the SGSN interface and then the GGSN interface. More in general, uplink flows/packets refer to flows/packets that originate from end-user mobile devices and have as a destination a machine located at the Internet. The term "downlink" applies to packets that "go" in the other direction.

The purposes of applying filtering and sampling are first to reduce the costs associated with data capture and storage, and second to increase the analysis speed of the captured and stored data. The present invention operates on a per packet basis and selects a large number of flows that satisfy at least one certain condition, referred to as interesting flows, and a small number of flows that do not satisfy this at least one condition, referred to as non-interesting flows. The selected flows are intended to be stored completely, whereas the non-selected ones are intended to either be packet sampled and stored or discarded.

With the approach according to the present invention one can bias the selection of packets and flows in a way that the most interesting flows for network operators are selected. The approach is designed so as to allow introducing the necessary bias in the flow and packet sampling processes in a way that enables a network operator to easily configure these sampling processes based on the available processing and storage capacity and on analysis needs. The present invention can especially be used in data analysis for network management, security, network control and optimization.

In a first advantageous embodiment in step a) a first selection condition is determined as follows:

> a1) providing a pre-determinable number of storage locations;
> a2) counting for a plurality of transmitting instances the number of flows which are assigned to a respective transmitting instance of the plurality of transmitting instances;

a3) entering the transmitting instances sorted according to the currently assigned number of flows assigned to respective transmitting instance, starting with the transmitting instance to which currently the largest number of flows is assigned;

a4) determining that the flows of the transmitting instances currently entered in the first n storage locations fulfil the first selection condition.

In this way flows associated with a very active mobile phone user, further denoted as mIP, can be found and stored for analysis. In the sense of the present invention a mobile IP is regarded as very active, if it generates a large number of flows in a relatively short time period. This may be a terminal that in the case of connection failures or timeouts repeatedly attempts at establishing a new connection. Then, a large number of connection establishment attempts will be observed within a short period of time, e.g. one second. By proceeding in this way the most active instances are discernible at any time. This first selection condition takes into consideration the fact that in particular such mIPs appear as very active in which there exists a transmission problem. The cause of error may be of various natures, for instance be located with the transmitting instance or else with the receiving instance. The analysis of the packets made available in this way allows for identifying the true cause. Preferably step a2) comprises the following sub-steps: a21) checking whether the current packet concerns the start of a flow; a22) checking whether the associated flow is already entered in a first list (i.e., a data structure supporting insert, update and delete operation) for starting flows; if the checking is answered in the negative: entering the flow identification number into the list for starting flows; and a23) incrementing a counter value for flows of the corresponding transmitting instance. In this way for each starting flow it is verified whether it was already counted for the sending instance or not. Preferably, the following further step is comprised: a24) reducing the counter value for flows of the corresponding transmitting instance each after a pre-determinable period of time of inactivity. This takes into consideration that an instance making a number of attempts for instance within 24 hours is uncritical. However, if the same number of attempts is made within one hour, a critical problem might be given.

According to a preferred embodiment a step b2) comprises the following sub-steps: b21) application of a sampling function to the current packet in dependency on the counter value and a pre-determinable top and a pre-determinable bottom limit value for the counter value; and b22) in case the current packet fulfils the sampling function of step b21): storing the current packet. In this way a sampling function is created, with the likelihood that the current packet is stored being the larger, the higher is the counter value. Accordingly, critical connections are more likely to be recorded than uncritical ones. This allows for optimum use of the resources. Particularly preferably, step b22) comprises the following sub-steps: b221) entering the flow identification number of the current packet into a second list of flows to be stored; and b222) deleting the flow identification number from the list for starting flows. By way of this measure it is ensured that upon a current packet having fulfilled the sampling function of step b22) all packets of the flow are recorded. For this purpose a separate second list is provided. As soon as a flow identification number is entered in the second list, the current packets of this flow are stored without further checking. Then the flow identification number can be deleted from the first list for starting flows.

An alternative or additional selection condition may be fixed in step a) by the connection establishment time of a flow. A very high connection establishment time is indicative of a problem in the network. In a preferred embodiment a connection establishment time is regarded as very high, if it is significantly higher than the average connection establishment time. In this regard a terminal for instance attempts at establishing a connection with the server, with this connection establishment taking an unusually long time. This may be indicative of the server being overstrained or the path leading there.

Preferably, in this regard in a step e1) it is checked whether the current packet concerns a request for establishing a flow; in a subsequent step e2) in case the checking in step e1) is answered in the affirmative: entering the flow identification number into the third list for flows, for which a request for establishing a flow was sent but is still unconfirmed; subsequently a step e3) is performed, in which upon receipt of a confirmation of a successful establishment of this connection for a flow that was entered according to step e2) into the third list the following two steps are performed: e31) calculating the connection establishment time of the flow; and e32) deleting the flow identification number from the third list. By way of this way of proceeding it is ensured that for each flow the connection establishment time is established and thus a complete capturing of all flows that might be indicative of a problem can be ensured. Particularly preferably in a step e4) a sample function to the current packet is applied in dependency on the calculated connection establishment time of the flow and a pre-determinable bottom limit value for the connection establishment time. In a subsequent step e5) in case the current packet fulfils the sampling function of step e4) a step e51) is performed, in which the current packet is stored, and a step e52), in which the flow identification number is entered in the second list of flows to be stored. By way of this kind of sampling it is ensured that the likelihood that the current packet and thus the current flow is fully recorded is the higher, the longer is the connection establishment time determined for this flow. Thereby in particular problematic flows are more likely to be recorded than unproblematic ones.

An alternative or additional selection condition in step a) can be determined by the number of packets of a flow. This takes into consideration the insight that in the case of established connections about 1 per mille of the terminals block about 80 per cent of the network capacity. Insofar for network operators it is of major interest to identify such flows.

Preferably, the checking of whether the third selection condition is given comprises the following steps: f1) checking whether the current packet concerns the start of a flow; and f2) in case the checking in step f1) is answered in the affirmative, applying a sampling function to the actual packet. Through applying a sampling function only a pre-determinable number of flows is selected for storage. Insofar preferably a step f3) follows, in which it is checked whether the current packet fulfils the sampling function of step f2). If this is the case in a step f31) the current packet is buffered and in a step f32) the flow identification number is entered in a fourth list. The flows entered into the fourth list accordingly are subject to the subsequent analyses, which aim at checking whether a pre-determinable limit value for the number of packets of the flow is exceeded. Accordingly it is preferred, to subsequently perform the steps for the flows listed in the fourth list follow: g1) incrementing the counter value for packets of the current flow; g2) in case the counter value remains below a pre-determinable limit value for the number of packets of a flow g22) buffering the current packet; and g23) if a flow is inactive for a period of time greater than a pre-determinable period of time or a flow termination message is received: g231) deleting the flow identification number from the fourth list; and g232) discarding the buffered packets of this flow; g3) in case the counter value exceeds the pre-determinable limit value for the number of packets of a flow, application of a sampling function to the current packet. In this way flows the size of which exceeds a certain limit value are recorded with a pre-determinable likelihood. Inactive flows not having reached the limit value for the number of packets are discarded. If in a subsequent step g4) it is found that the current packet fulfils the sampling function of step g3), the following steps are performed: g41) storing the buffered packets of the flow to which current belongs; g42) entering the flow identification number into the second list of flows to be stored and g43) deleting the flow from the fourth list. By way of entering the flow identification number into the second list such qualified flows are not checked once more but recorded without further checking. This again saves resources which become available for other analyses. However, if in a step g5) it is found that the current packet does not fulfil the sampling function of step g3), the flow identification number is entered into a fifth list. This allows for storing flows that were not classified as interesting by fulfilling the sampling function of step g3). For this purpose in a step g6) for flows entered into the fifth list the following steps are performed: g61) incrementing the counter value for packets of the current flow; and applying a sampling function to the current packet. This allows for recording flows that previously were qualified as uninteresting, and this the more likely, the larger the number of packets of the corresponding flows is. Preferably, this is followed by a step g7) in which, in case the current packet fulfils the sampling function of step g2), the following steps are performed: g71) storing the current packet; g72) deleting the flow from the fifth list. Accordingly, for such packets not the complete flow is recorded but only packets upon a pre-determinable sampling function.

In a particularly preferred embodiment of the present invention, the first, the second and/or the third selection condition is checked individually or serially in random order. According to the present invention, the order of checking the selection condition can be changed, various sampling functions can be applied. I.e., by way of serial checking of the selection conditions - if, for example, a first selection condition is not fulfilled, it is checked whether a second and subsequently whether a third selection condition is fulfilled - nearly all flows which are of interest to a network operator can be selected, recorded, and made available for analysis.

As already mentioned, packets of a flow are stored without further checking, if the flow identification number of the flow is contained in the second list. Thus, considerable processing time can be saved, the components involved in the selection can be dimensioned according to a reduced processing speed and therefore the present invention be realized at low costs.

If various packet types are transmitted in the communication network between the first and the second instance, in particular UDP packets and TCP packets, preferably in a checking step performed prior to step a) at least one entering packet type, in particular UDP packets, are discarded. This, too, reduces the processing effort involved clearly, with the method being focused on packets which facilitate checking of the corresponding selection condition at an as small as possible effort.

According to an embodiment of the invention, the communication network is a mobile radio network.

Further preferred embodiments of the invention may be gathered from the subclaims.

The preferred embodiments and their advantages presented with reference to the method according to the invention apply in analogy, as far as applicable, to the device according to the invention.

In the following a proposed approach consisting of six building blocks (BB1-BB6) is described as an embodiment of the invention in more detail with reference to the enclosed figures which show in:

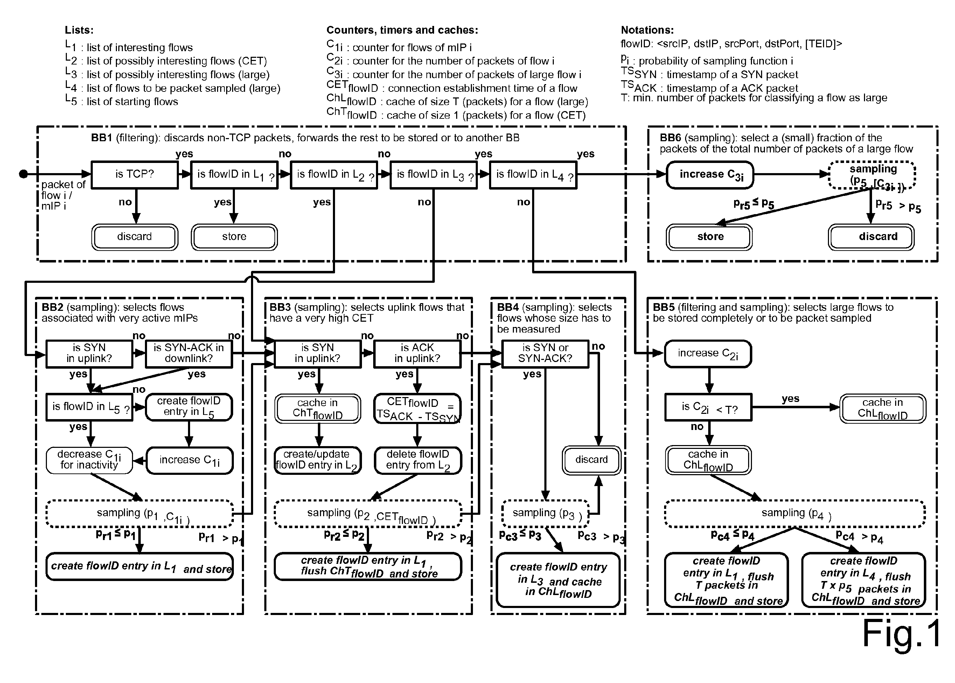

Fig. 1: BB1, which is a filtering component that discards UDP packets and forwards the TCP packets to the other building blocks or to be stored. BB2 and BB3 are sampling components that examine the TCP handshake packets of the uplink flows and mostly select flows associated with very active mIPs and those that have a very high connection establishment time (CET), respectively. BB4 is a sampling component that reduces the number of flows that are passed to BB5 and BB6. BB5 is a filtering and sampling component that detects large flows and forwards some of them to be stored and the remaining to be packet sampled. BB6 is a sampling component that selects some packets of the large flows that it receives from BB5;

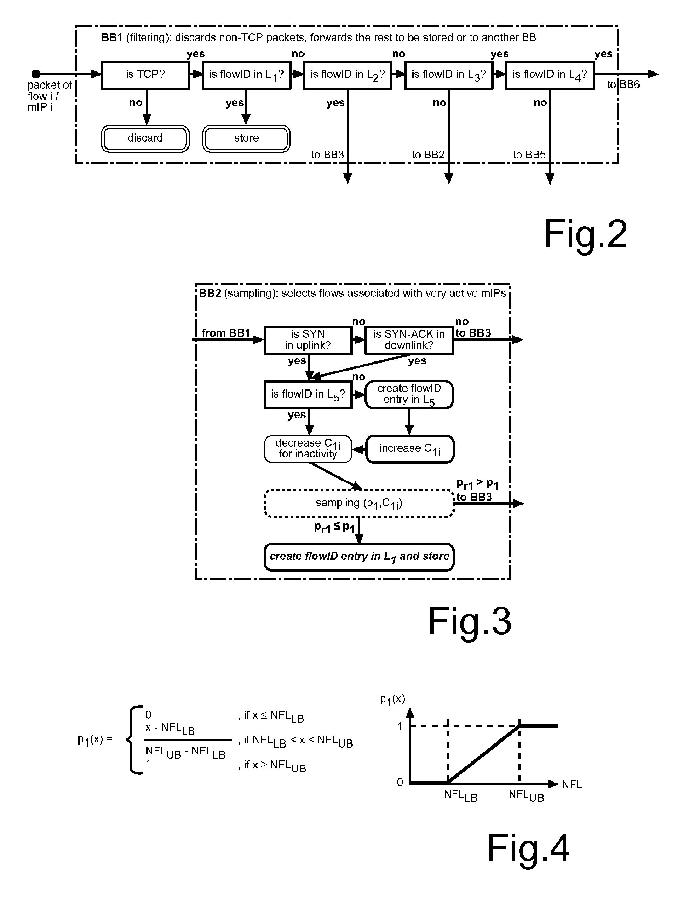

Fig. 2: BB1, which is a filtering component that operates on the header of the packets that are encapsulated in the incoming GTP-U packets. It discards the UDP packets, examines if an entry with the Packet Flow Id of the TCP packets is in the lists of interesting flows (L1), possibly interesting flows (L2 and L3) or flows to be packet sampled (L4). If the Packet Flow Id is in L1, it forwards it to be stored; otherwise, if the Packet Flow Id is in L2, L3 or L4 it forwards it to BB2 - BB6;

Fig. 3: BB2, which is a sampling component that operates on the header of the packets that are encapsulated in the incoming GTP-U packets. It counts the flows associated with each mIP and uses biased sampling to mostly select flows associated with the most active mIPs;

Fig. 4: the sampling function of BB2, which takes as input the number of flows of a mIP i (value of counter $C_{1i}$) and, given the lower and upper bounds $NFL_{LB}$ and $NFL_{UB}$, produces a value $p_1$. If $p_{r1} \leq p_1$ ($p_{r1}$ denotes a randomly selected value from the range [0, 1]), the uplink TCP SYN or the downlink TCP SYN-ACK packet (and thereby the flow it belongs to) is classified as interesting and forwarded to be stored; otherwise ($p_{r1} > p_1$), the packet is forwarded to BB3;

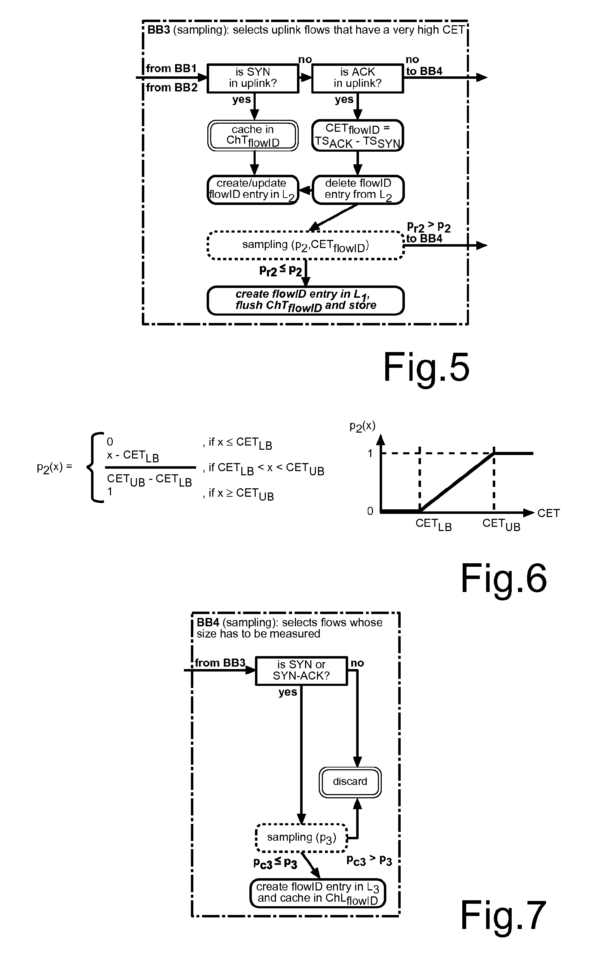

Fig. 5: the BB3, which is a sampling component that operates on the header of the packets that are encapsulated in the incoming GTP-U packets. It computes the CET of each uplink TCP flow by subtracting the timestamp of either its 1st or its last observed TCP SYN packet from the one of its TCP ACK packet ($TS_{ACK}$— $TS_{SYN}$) and uses biased sampling to mostly select flows that have a very high CET;

Fig. 6: the sampling function of BB3, which takes as input the computed value of CET and given the lower and upper bounds $CET_{LB}$ and $CET_{UB}$ it produces a value $p_2$. If $p_{r2} \leq p_2$ ($p_{r2}$ denotes a randomly selected value from the range [0, 1]), the TCP ACK packet (and thereby the flow it belongs to) is classified as interesting; otherwise ($p_{r2} > p_2$), the packet is forwarded to BB4;

Fig. 7: the BB4, which is a sampling component that operates on the header of the packets that are encapsulated in the incoming GTP-U packets. It uses hash-based or random sampling to select a (small) fraction of the flows and discard the remaining packets;

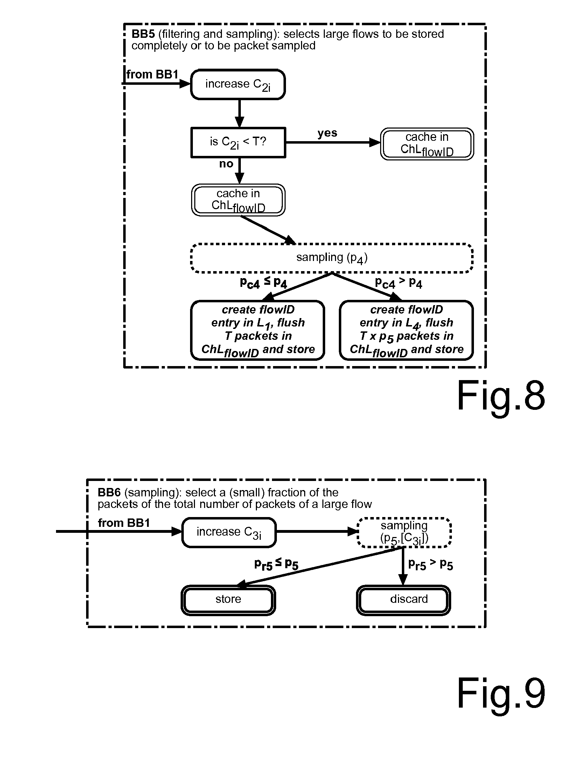

Fig. 8: the BB5, which is a filtering and sampling component that operates on the header of the packets that are encapsulated in the incoming GTP-U packets. It distinguishes large from small flows by temporarily storing the first T packets of each flow, forwards some large flows to be completely stored and the remaining ones to be packet sampled, and discards the small flows; and

Fig. 9: the BB6, which is a sampling component that operates on the header of the packets that are encapsulated in the incoming GTP-U packets. It applies random sampling or sampling with bias to the packets of large flows not classified as interesting by BB5 (or BB2 or BB3).

A preferred embodiment of the present invention is shown in Figure 1. It consists of six building blocks. The first building block (BB1) is a filtering component. It examines every incoming (GTP-U) packet and determines whether it belongs to a flow that has been selected previously to be stored completely (i.e., an interesting flow) or to a possibly interesting flow. In addition, it discards UPD packets and passes only TCP packets to the other building blocks, since the focus of this project is on TCP flows only. The second and third building blocks (BB2 and BB3) are sampling components. They examine the TCP handshake packets of the TCP flows and mostly select packets that belong to flows that are associated with very active mIPs and flows that have a very high connection establishment time (CET), respectively. They classify the selected packets (and as a consequence the flows that the selected packets belong to) as interesting and pass the remaining packets to the other building blocks. The fourth building block (BB4) is also a sampling component. It examines every incoming packet, selects only those that belong to a (small) fraction of the total flows and discard all the remaining packets; thereby, it essentially reduces the number of flows that are passed to the next building block. The fifth building block (BB5) is a filtering and sampling component. It temporarily stores the first few (T) packets of every incoming flow for a certain period of time in order to examine whether the flow is large or not. It classifies as interesting a (small) fraction of large flows, passes the packets that belong to large flows but were not classified as interesting to the next building block, and discards the packets that belong to small flows. The sixth building block (BB6) is a sampling component that examines every incoming packet and selects a (small) fraction of these packets. In the next sections, the building blocks that were briefly presented above are discussed in more detail. This includes presenting their design principle, implementation issues and explaining how to estimate the parameters of interest.

The present invention proposes a specific sampling approach that can bias the selection of packets according to the needs of network operators and service providers. With this approach one can select the best suitable data to accurately measure various quantities of interest.

BB1 concerns the forwarding of incoming packets to building blocks. It is a filtering component, and it is depicted in Figure 2. It operates on the header of every packet that is encapsulated in an incoming GTP-U packet and forwards it to be stored or to another building block. It performs the following operations:

First, BB1 examines if the packet is a TCP or a UDP packet. If it is a UDP packet, BB1 discards it; otherwise, BB1 performs the following operation. The rationale for discarding UDP packets is that the focus of the approach is on TCP flows (packets).

Second, BB1 examines if the Packet Flow Id of the packet is in a list of Packet Flow Ids, denoted by L1 hereafter, associated with flows that are classified as interesting. If the Packet Flow Id is in L1, BB1 forwards it to be stored; otherwise BB1 performs the following operation.

Third, BB1 examines if the Packet Flow Id of the packet is in a list of Packet Flow Ids, denoted by L2 hereafter, associated with flows that are classified as possibly interesting with respect to their CET. If the Packet Flow Id is in L2, BB1 forwards it to BB3; otherwise, BB1 performs the operation described in the following paragraph. L2 has the Packet Flow Ids of the uplink flows whose TCP handshake is not yet completed. In connection with this, once an uplink TCP SYN packet is captured an entry with its Packet Flow Id is inserted or updated in L2, and the entry is deleted if the corresponding SYN-ACK packet is captured or after a predetermined period of time.

Fourth, BB1 examines if the Packet Flow Id of the packet is in a list of Packet Flow Ids, denoted by L3 hereafter, associated with flows that are classified as possibly interesting with respect to their size (i.e., number of packets). If the Packet Flow Id is in L3, BB1 forwards it to BB2; otherwise, BB1 performs the operation described in the following paragraph. L3 has the Packet Flow Id of the flows whose first T packets are temporarily stored until a decision is made about whether they are large or not. In connection with this, once the first packet of a flow is captured an entry with its Packet Flow Id is inserted in L3, and the entry is deleted after a predetermined number of packets that belong to the flow has been captured or a predetermined period of time has expired.

Fifth, BB1 examines if the Packet Flow Id of the packet is in a list of Packet Flow Ids, denoted by L4 hereafter, associated with large flows to be packet sampled. If the Packet Flow IdflowID is in L4, BB1 forwards the packet to BB6 or else to BB5 (BB5 and BB6 are described below).

BB2 concerns the selecting of flows associated with very active mIPs. It is a sampling component, and it is depicted in Figure 3. It operates on the header of every packet that is encapsulated in an incoming GTP-U packet and selects mostly flows associated with very active mIPs. It performs the following operations:

First, BB2 examines if the incoming packet is the first TCP SYN or TCP SYN-ACK packet of an uplink or downlink flow, respectively. If this is the case (and assuming that the packet belongs to a flow that is associated with a mIP i), BB2 increases by one the value of a counter $C_{1i}$ associated with the IP Source Address of the uplink TCP SYN packet or the IP Destination Address of the downlink TCP SYN-ACK packet, and performs the operation described in the following paragraph; otherwise, BB2 forwards the packet to BB3. The rationale for keeping and incrementing by one the value of counter $C_{1i}$ is that deciding whether a mIP is very active or not requires considering the uplink and the downlink flows associated with it. This, in practice, requires counting the uplink TCP SYN packets per flow and the downlink TCP SYN-ACK packets per flow that are associated with the mIP. This is because these packets are the first packets of the uplink and downlink flows, respectively. To count the number of flows that are associated with a mIP, BB2 examines if the Packet Flow Id of each uplink TCP SYN or downlink SYN-ACK packet is in a list of Packet Flow Ids, denoted by L5 hereafter, associated with starting flows. The value of $C_{1i}$ is increased by one and an entry is inserted in L5 only if there is not yet an entry with the Packet Flow Id of the packet in L5. If the interest is not in deciding whether a mIP is very active or not based on the number of flows but based on the number of connection establishment attempts instead, then the list L5 has to be omitted and the value of the counter $C_{1i}$ has to be increased by one for every uplink TCP SYN and downlink TCP SYN-ACK packet. It should be noted that, as illustrated in Figure 3, the value of counter $C_{1i}$ has to be decremented with a certain rate to account for the inactivity periods of mIP i. The reason to decrement this counter is that otherwise the counter is always incrementing. This would have as a result that BB2 would discard flows from "new" mIPs in favor of "old" mIPs with a bigger number of "old" flows.

Second, BB2 applies sampling with bias to the flows of the IP in the IP Source Address of the TCP SYN or the IP Destination Address of the TCP SYN-ACK packet. The degree of bias is determined by the value of the counter $C_{1i}$ in a way to mostly select the flows of the very active mIPs. In more detail, the higher the value of the counter $C_{1i}$, the more probable it is that the packet (and as a consequence the flow that the packet belongs to) is selected. The sampling function is given in Figure 4; x is the value of the counter $C_{1i}$ and $NFL_{LB}$ and $NFL_{UB}$ are a lower and an upper bound, respectively, of the number of flows associated with mIP i. Determining whether an uplink TCP SYN or a downlink TCP SYN-ACK packet has to be selected is a two-step procedure. First, the value of the sampling function, denoted by $p_1$, is computed, and second this value is compared with a value randomly selected from the range [0, 1], denoted by $p_{r1}$. If $P_{r1} \leq p_1$, the packet (flow) is selected and BB2 performs the following operation; otherwise, ($p_{r1} > p_1$), BB2 forwards the packet to BB3.

Third, BB2 inserts an entry with the Packet Flow Id of the packet under consideration in the list of interesting flows (L1), and forwards the packet to be stored. To obtain the estimations and the percent error (i.e., the relative error multiplied by 100 to make it a percentage) of the number of flows associated with a mIP for which some flows are selected by BB2 (i.e., incoming flows) given the output of BB2 (i.e., outgoing flows) the formulas that are listed below have to be used; the symbol ^ denotes an estimation of a property of the set of incoming flows, and $f_{i2}$ and $f_{o2}$ are the numbers of incoming and outgoing flows, respectively:

$$\hat{f}_{i2} = \arg \min_{n \in Z^*} \left| f_{o2} - \sum_{x=1}^{n} p_1(x) \right| \text{ or } f_{o2} \approx \sum_{x=1}^{\hat{f}_{i2}} p_1(x)$$

$$\% \ error \ f_{i2} = \left| \frac{f_{i2} - \hat{f}_{i2}}{f_{i2}} \right| \times 100$$

BB3 concerns the selecting of uplink flows that have a very high CET. It is a sampling component, and it is depicted in Figure 5. It operates on the header of every packet that is encapsulated in an incoming GTP-U packet and selects mostly uplink TCP flows with a very high CET. It performs the following operations:

First, BB3 examines if the incoming packet is an uplink TCP SYN packet. If this is the case, BB3 temporarily stores the packet in a cache associated with the flow (Packet Flow Id) that the packet belongs to, denoted by $ChT_{flowID}$ hereafter, and performs the operation described in the following paragraph. Otherwise, BB3 examines if the packet is an uplink TCP ACK packet. If this is the case, BB3 computes the CET of the flow that the packet belongs to by subtracting from the timestamp of the packet in hand ($TS_{ACK}$) the timestamp of the last corresponding TCP SYN packet ($TS_{SYN}$), and then performs the operation described in the following paragraph. The rationale for computing the CET of the flow by using only the timestamps of the TCP SYN and TCP ACK packets is to eliminate the need for correlating uplink and downlink flows. If the packet is not an uplink TCP SYN or TCP ACK packet, BB3 forwards the packet to BB4. It should be noted that special attention should be paid to delete from list L2 every entry inserted as a result of capturing a TCP SYN packet for which no corresponding TCP ACK packet is captured within a predetermined time period.

Second, if the packet is an uplink TCP SYN packet, BB3 creates (i.e., if it is the first TCP SYN packet) or updates (i.e., if it is not the first TCP SYN packet) an entry with the Packet Flow Id of the packet under consideration in the list of uplink flows whose TCP handshake is not already completed (L2). If the packet is an uplink TCP ACK packet, BB3 deletes the entry from L2 and performs the following operation.

Third, BB3 applies sampling with bias to the uplink flows. The degree of the bias is determined by the computed value of the CET of each flow in a way to mostly select the packets that belong to flows with a very high CET. In more detail, the higher the value of the CET of the flow that the packet belongs to, the more probable it is that the packet (and as a consequence the flow that the packet belongs to) is selected. The sampling function is given in Figure 6 (note that the principle of this sampling function is the same as for the sampling function of BB2); x is the computed value of CET and $CET_{LB}$ and $CET_{UB}$ a lower and an upper bound, respectively, of the CET of an uplink flow. Determining whether a TCP ACK packet has to be selected is a two-step procedure. First, the value of the sampling function, denoted by $p_2$, is computed, and second the computed value is compared with a value randomly selected from the range [0, 1], denoted by $p_{r2}$ hereafter. If $p_{r2} \leq p_2$, the packet (flow) is selected and BB3 performs the following operation; otherwise ($p_{r2} > p_2$), BB3 forwards the packet to BB4.

Fourth, BB3 inserts an entry with the Packet Flow Id of the packet in the list of interesting flows (L1), forwards the corresponding cached or buffered packets to be stored, and flushes $ChT_{flowID}$. To obtain the estimation and the percent error (i.e., the relative error multiplied by 100 to make it a percentage) of the number of incoming flows whose CET is above $CET_{LB}$ given the output of BB3 (i.e., outgoing flows) the formulas that are listed below have to be used; the symbol ^ denotes an estimation of a property of the set of incoming flows, and $f_{i3}$ and $f_{o3}$ are the numbers of incoming and outgoing flows, respectively:

$$\hat{f}_{i3} = \sum_{x=1}^{f_{o3}} \frac{1}{p_2(x)}$$

$$\% \ error \ f_{i3} = \left| \frac{f_{i3} - \hat{f}_{i3}}{f_{i3}} \right| \times 100$$

BB4 concerns the selecting of flows whose size has to be measured. It is a sampling component, and it is depicted in Figure 7. It operates on the header of every packet that is encapsulated in an incoming GTP-U packet, selects only those that belong to a (small) fraction of the total flows and discards the remaining packets; by doing this, it essentially reduces the number of flows (and thereby packets) that are forwarded to the next building block. It performs the following operations:

First, BB4 examines if the incoming packet is the first TCP SYN or TCP SYN-ACK packet of an uplink or downlink flow, respectively (i.e., if it is the first packet of an uplink or downlink flow). If this is the case, BB4 performs the operation described in the following paragraph; otherwise, BB4 discards the packet. The rationale for this examination is that if the packet is not the first packet of a flow, and the flow it belongs to has not been classified by BB2 or BB3 as interesting, then the packet belongs to a non-interesting flow, and therefore it can be discarded.

Second, BB4 applies hash-based sampling to the TCP flows. In more detail, determining whether a TCP SYN or TCP SYN-ACK packet (and as a consequence the flow that the packet belongs to) has to be selected is a two-step procedure. First, a value, denoted by $p_{c3}$, is computed by applying a hash function to the Packet Flow Id of the TCP SYN or TCP SYN-ACK packet, and second the computed value is compared with a predetermined value from the output range of the hash function, denoted by $p_3$. If $p_{c3} \leq p_3$, the packet (flow) is selected and BB4 performs the operation described in the following paragraph; otherwise ($p_{c3} > p_3$), BB4 discards the packet. Before proceeding to describe the following operation three points should be noted. The first point is that the hash function that was used for the needs of this project is the BOB hash function described in the publication of B. Jenkins mentioned above. The reason for using this function is that the experimental evaluation presented in the publication of C. Henke, C. Schmoll and T. Zseby mentioned above and the RFC 5475 suggest that this is the optimal hash function. The second point is that the percentage of flows that are selected is controlled directly by determining $p_3$. This is because the values that the hash function generates are uniformly distributed in its output range. The third point is that instead of applying hash-based sampling it is possible to apply random sampling to the TCP flows.

Third, BB4 inserts an entry with the Packet Flow Id of the packet in the list of flows whose first T packets are temporarily stored until a decision is made about whether they are large or not (L3) and forwards the packet to be temporarily stored in a cache associated with the flow (Packet Flow Id) that the packet belongs to, which is denoted by $Ch_{Packet \ Flow \ Id}$ hereafter (for more information about $ChL_{Packet \ Flow \ Id}$ refer to the description of BB5 in the next section).

To obtain the estimations and the percent error (i.e., the relative error multiplied by 100 to make it a percentage) of the number of flows that arrive at BB4 (i.e., incoming flows) given the output of BB4 (i.e., outgoing flows) the formulas that are listed below have to be used; the symbol ^ denotes an estimation of a property of the set of incoming flows, and

$f_{i4}$ and $f_{o4}$ are the numbers of the incoming and outgoing flows, respectively:

$$\hat{f}_{i4} = \frac{f_{o4}}{p_3}$$

$$\% \; error \; f_{i4} = \left| \frac{f_{i4} - \hat{f}_{i4}}{f_{i4}} \right| \times 100$$

BB5 concerns the selecting of large flows and classifying them as interesting. Flows that have a very large number of packets are also referred to as elephant flows. It is a filtering and sampling component, and it is depicted in Figure 8. It operates on the header of every packet that is encapsulated in an incoming GTP-U packet, examines whether the flow that the packet belongs to is large or not, classifies as interesting a (small) fraction of the large flows, forwards all the packets that belong to large flows that are not classified as interesting to be sampled (i.e., by BB6) and discards the packets that belong to small flows. It performs the following operations:

First, BB5 increases by one the value of a counter $C_{2i}$ associated with the flow (Packet Flow Id) that the incoming packet belongs to (assume that the incoming packet belongs to flow i), and performs the following operation.

Second, BB5 examines if the value of $C_{2i}$ is smaller than a predetermined value T (i.e., if less than T packets that belong to flow i have been already captured). If this is the case, BB5 temporarily stores the packet in a cache associated with the flow (Packet Flow Id) that the packet under consideration belongs to, denoted by $ChL_{flowID}$ hereafter; otherwise, BB5 stores the packet in $ChL_{flowID}$ and then performs the following operation. The rationale for counting (see the previous operation) and temporarily storing packets of each flow is that a flow is regarded as large if more than T packets that belong to it are captured.

Third, BB5 applies hash-based sampling to the large flows. In more detail, determining whether a packet (and as a consequence the flow that the packet belongs to) has to be selected is a two-step procedure. First, a value, denoted by $p_{c4}$, is computed by applying a hash function to the Packet Flow Id of the packet under consideration, and second the computed value is compared with a predetermined value from the output range of the hash function, denoted by $p_4$. If $p_{c4} \leq p_4$, the packet (flow) is selected and BB5 inserts an entry with the Packet Flow Id of the packet in the list of interesting flows (L1), forwards the T cached packets to be stored, and flushes $ChL_{flowID}$; otherwise ($P_{c4} > p_4$), BB5 inserts the entry in the list of flows to be packet sampled (L4), forwards T x $p_5$ of the cached packets to be stored (for more information about $p_5$ refer to the description of BB6 in the next Section), and flushes $ChL_{flowID}$. Before proceeding three points should be noted. The first point is that the hash function that was used for the needs of this project is the BOB hash function described in the publication of B. Jenkins mentioned above. The reasons for using this function are previously pointed out in the previous Section. The second point is that the percentage of flows that are selected is controlled directly by determining $p_4$. This is because the values that the hash function generates are uniformly distributed in its output range. The third point is that instead of applying hash-based sampling it is possible to apply random sampling to the large flows. No estimators are needed for BB5. This is because this building block forwards all the (packets of the) large flows and discards all the (packets of the) small ones. This implies that if the interest is solely in finding the number of large flows that arrive at BB5, it suffices to add the number of entries in the list of interesting flows (L1) that correspond to the flows that have more than T packets (i.e., are large flows) to the number of entries in the list of flows to be packet sampled (L4). However, if the interest is also in finding the number of small flows (and/or the number of packets of small flows, the distribution of packets to small flows) that arrive at BB5 several additional counters for storing the relevant information have to be introduced.

BB6 concerns the selecting of large flows initially classified as non-interesting. It is a sampling component, and it is depicted in Figure 9. It operates on the header of every packet that is encapsulated in an incoming GTP-U packet, and selects a (small) fraction of the packets of the large flows that were not classified as interesting by BB5. It performs the following operations:

First, BB6 increases by one the value of a counter $C_{3i}$ associated with the flow (Packet Flow Id) that the incoming packet belongs to (assume that the incoming packet belongs to flow i) and performs the following operation.

Second, BB6 applies random sampling or sampling with bias to the packets. If random sampling is applied, the previous operation (and thereby the counter $C_{3i}$) has to be omitted. In this case (random sampling), for every incoming packet a value, denoted by $p_{r5}$, is randomly generated and this value is compared with a predetermined probability value, denoted by $p_5$. Both $p_{r5}$ and $p_5$ have to be in the same range. If sampling with bias is applied, the degree of bias is determined by the value of the counter $C_{3i}$ in a way to mostly select packets from the largest flows (i.e., the flows to which most of the packets belong). In more detail, the higher the value of the counter $C_{3i}$, the more probable it is that the packet is selected. In this case (sampling with bias), for every packet a value, denoted by $p_{r5}$, is randomly generated and this value is compared with a value computed for the packet under consideration based on the value of the counter $C_{3i}$, denoted by $p_5$. Both $p_{r5}$ and $p_5$ have to be in the same range. For instance, $p_5$ can be set to be the inverse of the value of the counter $C_{3i}$. In both cases, a packet is selected if $p_{r5} \leq p_5$ and BB6 forwards it to be stored; otherwise, ($p_{r5} > p_5$), BB6 discards it. To obtain the estimations and the percent error (i.e., the relative error multiplied by 100 to make it a percentage) of the number of packets and bytes of a flow that arrives at BB6 (i.e., incoming packets (flow)) given the output of BB6 (i.e., outgoing packets (flow)) the formulas that are listed below have to be used; the symbol ^ denotes an estimation of a property of the incoming packets (flow), $p_i$, $b_i$ and $p_o$, $b_o$ represent the numbers of packets and bytes of the incoming and outgoing flows, respectively, and $ms_o$ is the mean packet size (in bytes) of the packets of the incoming flow:

$$\hat{p}_i = \frac{p_o}{p_5}$$

$$\% \, error \, p_i = \left| \frac{p_i - \hat{p}_i}{p_i} \right| \times 100$$

$$\hat{b}_i = \hat{p}_i \times ms_o$$

$$\% \, error \, b_i = \left| \frac{b_i - \hat{b}_i}{b_i} \right| \times 100$$

Note that the formula for obtaining the estimation of the number of packets given above is only valid if random sampling is applied. If sampling with bias is applied instead, $p_5$ is not constant but a function of the value of the counter $C_3$ (such a function is given in the paper of A. Kumar and J. Xu, mentioned above). As a result, the formula given in the Section that describes BB3 for estimating the number of flows associated with a mIPs has to be used.

Remark: Different order of the building blocks that compose the method (BB2 - BB6 can operate in any other order), different sampling functions within the building blocks (other functions can be used for BB2, BB3 and BB6 or other algorithms can be used for BB4 and BB5) and modification of the operations of the building blocks is/are possible and comprised by the present invention.

List of abbreviations used in the present application in addition to the abbreviations explained in Fig. 1:

mIP: mobile user of the internet protocol;
CET: connection establishment time;
UDP: user datagram protocol;
TCP: transmission control protocol;
BB: building block;
GTP-U: GPRS tunnelling protocol user plane;
$NFL_{LB}$: lower bound for sampling function on the number of flows per mIP;
$NFL_{UB}$: upper bound for sampling function on the number of flows per mIP;
$CET_{LB}$: lower bound for the sampling function on the CET;
$CET_{UB}$: upper bound for the sampling function on the CET;

TCP SYN: a TCP/IP packet with the SYN flag marked;
TCP SYN-ACK: A TCP/IP packet with both SYN and ACK flags marked;
$TS_{ACK}$: timestamp of a TCP ACK packet;
$TS_{SYN}$: timestamp of a TCP SYN packet;
IP Source Address: source IP address of a packet/flow;
IP Destination Address: destination IP address of a packet/flow.

**Claims**

1. A method for analysing a communication network, wherein the data transmitted in the communication network between a first and a second instance are organized in flows, wherein the data of a flow are transmitted in at least one packet, wherein each flow and thus the packets of each flow are assigned a flow identification number, wherein the packets of a flow are captured at an interface of the communication network between the first and the second instance, **characterized by** the following steps:

   a) determining at least one selection condition for selecting flows the data of which are to be made available for the analysis;
   b) capturing of data at an interface by way of:

      b1) checking whether the current packet belongs to a flow that fulfils the at least one selection condition;
      b2) in case the checking in step b1) is answered in the affirmative: storing the current packet according to a pre-determinable sampling function;
      b3) repeating the steps b1) and b2) until occurrence of a termination condition;

   c) making data available at an interface;
   d) analyzing the data made available.

2. The method according to claim 1,
   **characterized in that**,
   in step a) a first selection condition is determined as follows:

   a1) providing a pre-determinable number of storage locations;
   a2) counting for a plurality of transmitting instances the number of flows which are assigned to a respective transmitting instance of the plurality of transmitting instances;
   a3) entering the transmitting instances sorted according to the currently assigned number of flows assigned to respective transmitting instance, starting with the transmitting instance to which currently the largest number of flows is assigned;
   a4) determining that the flows of the transmitting instances currently entered in the first n storage locations fulfil the first selection condition.

3. The method according to claim 2,
   **characterized in that**
   step a2) comprises the following sub-steps:

   a21) checking whether the current packet concerns the start of a flow;
   a22) checking whether the associated flow is already entered in a first list (L5) for starting flows;
   If the checking is answered in the negative:

      entering the flow identification number in the list (L5) for starting flows;

   a23) incrementing a counter value for flows of the corresponding transmitting instance.

4. The method according to claim 3,
   **characterized by**
   the following further step:

   a24) reducing the counter value for flows of the corresponding transmitting instance each after a pre-determinable period of time of inactivity.

5. The method according to any one of claims 3 or 4,
   **characterized in that**
   step b2) comprises the following sub-steps:

   b21) application of a sampling function ($p_i$, $C_{1i}$) to the current packet in dependency on the counter value and a pre-determinable top and a pre-determinable bottom limit value for the counter value; and
   b22) in case the current packet fulfils the sampling function of step b21):

   storing the current packet.

6. The method according to claim 5,
   **characterized in that**
   step b22) comprises the following sub-steps:

   b221) entering the flow identification number of the current packet into a second list (L1) of flows to be stored; and
   b222) deleting the flow identification number from the first list (L5) for starting flows.

7. The method according to any one of the preceding claims,
   **characterized in that**
   in step a) a second selection condition is determined by the connection establishment time of a flow.

8. The method according to claim 7,
   **characterized by** the following further steps:

   e1) checking whether the current packet concerns a request for establishing a flow;
   e2) in case the checking in step e1) is answered in the affirmative:

   entering the flow identification number into the third list (L2) for flows, for which a request for establishing a flow was sent but is still unconfirmed;

   e3) upon receipt of a confirmation of a successful establishment of a connection for a flow that was entered according to step e2) into the third list (L2):
   e31) calculating the connection establishment time of the flow; and
   e32) deleting the flow identification number from the third list (L2).

9. The method according to claim 8,
   **characterized by** the following further steps:

   e4) applying a sampling function ($p_2$, $CET_{flowID}$) to the current packet in dependency on the calculated connection establishment time of the flow and a pre-determinable top and a pre-determinable bottom limit value for the connection establishment time;
   e5) in case the current packet fulfils the sampling function of step e4):
   e51) storing the current packet; and
   e52) entering the flow identification number into the second list (L1) of flows to be stored.

10. The method according to any one of the preceding claims,
    **characterized in that**
    in step a) a third selection condition is determined through the number of packets of a flow.

11. The method according to claim 10,
    **characterized by** the following further steps:

    f1) checking whether the current packet concerns the start of a flow; and
    f2) in case the checking in step f1) is answered in the affirmative:

    applying a sampling function ($p_3$) to the actual packet.

**12.** The method according to claim 11,
**characterized by** the following further step:

> f3) in case the current packet fulfils the sampling function of step f2):
>
>> f31) buffering storing the current packet; and
>> f32) entering the flow identification number into a fourth list (L3).

**13.** The method according to 12,
**characterized by** the following further steps to be performed on flows listed in the fourth list (L3):

> g1) increment the counter value ($C_{2i}$) for packets of the current flow;
> g2) in case the counter value remains below a pre-determinable limit value (T) for the number of packets of a flow:
>
>> g22) buffering storing the current packet; and
>> g23) if a flow is inactive for a period of time greater than a pre-determinable period of time of a flow termination message is received:
>>
>>> g231) deleting the flow identification number from the fourth list (L3); and
>>> g232) discarding the buffered packets of this flow;
>>> g3) in case the counter value exceeds the pre-determinable limit value (T) for the number of packets of a flow:
>>>
>>>> application of a sampling function ($p_4$) to the current packet.

**14.** The method according to claim 13,
**characterized by** the following further step:

> g4) In case the current packet fulfils the sampling function ($p_4$) of step g3):
>
>> g41) storing the buffered packets of the flow to which the current packet belongs;
>> g42) entering the flow identification number into the second list (L1) of flows to be stored; and
>> g43) deleting the flow from the fourth list (L3).

**15.** The method according to claim 13,
**characterized by** the following further step:

> g5) In case the current packet does not fulfil the sampling function ($p_4$) of step g3):
>
>> entering the flow identification number into a fifth list (L4).

**16.** The method according to claim 15,
**characterized by** the following further steps:

> g6) for flows entered in the fifth list (L4):
>
>> g61) incrementing the counter value ($C_{3i}$) for packets of the current flow; and
>> g62) applying a sampling function ($p_5$, $C_{3i}$) to the current packet.

**17.** The method according to claim 16,
**characterized by** the following further step:

> g7) in case the current packet fulfils the sampling function of step g62):
>
>> g71) storing the current packet; and
>> g72) deleting the flow from the fifth list (L4).

**18.** The method of any one of the preceding claims,

**characterized in that**

the fulfilment of the first, the second and/or the third selection condition is checked individually or serially in random order.

19. The method according to one of the preceding claims,
**characterized in that**
the packets of a flow are stored without further checking, if the flow identification number of the flow is entered in the second list.

20. The method according to any one of the preceding claims,
**characterized in that**
in the communication network various packet types, in particular UDP packets and TCP packets, are transmitted between the first and the second instance, wherein in a checking step being performed prior to step b) at least one entering packet type, in particular UDP packets, is discarded.

21. The method according to any one of the preceding claims,
**characterized in that**
the communication network concerns a mobile radio network.

22. A device for performing a method according to any one of the preceding claims.

**Lists:**

$L_1$ : list of interesting flows
$L_2$ : list of possibly interesting flows (CET)
$L_3$ : list of possibly interesting flows (large)
$L_4$ : list of flows to be packet sampled (large)
$L_5$ : list of starting flows

**Counters, timers and caches:**

$C_{1i}$ : counter for flows of mIP i
$C_{2i}$ : counter for the number of packets of flow i
$C_{3i}$ : counter for the number of packets of large flow i
$CET_{flowID}$ : connection establishment time of a flow
$ChL_{flowID}$ : cache of size T (packets) for a flow (large)
$ChT_{flowID}$ : cache of size 1 (packets) for a flow (CET)

**Notations:**

flowID: <srcIP, dstIP, srcPort, dstPort, [TEID]>

$P_i$ : probability of sampling function i
$TS_{SYN}$ : timestamp of a SYN packet
$TS_{ACK}$ : timestamp of a ACK packet
T: min. number of packets for classifying a flow as large

**BB1** (filtering): discards non-TCP packets, forwards the rest to be stored or to another BB

packet of flow i / mIP i → is TCP? — yes → is flowID in $L_1$ ? — no → is flowID in $L_2$ ? — no → is flowID in $L_3$ ? — yes → is flowID in $L_4$ ? — yes →

is TCP? — no → discard
is flowID in $L_1$ ? — yes → store
is flowID in $L_2$ ? — yes →
is flowID in $L_3$ ? — no →
is flowID in $L_4$ ? — no →

**BB6** (sampling): select a (small) fraction of the packets of the total number of packets of a large flow

increase $C_{3i}$ → sampling ($p_5$ ,$C_{3i}$)

$p_{r5} \leq p_5$ → store
$p_{r5} > p_5$ → discard

**BB2** (sampling): selects flows associated with very active mIPs

is SYN in uplink? — no → is SYN-ACK in downlink? — no →
is SYN in uplink? — yes → is flowID in $L_5$ ?
is SYN-ACK in downlink? — yes →
is flowID in $L_5$ ? — no → create flowID entry in $L_5$ → increase $C_{1i}$
is flowID in $L_5$ ? — yes → decrease $C_{1i}$ for inactivity
→ sampling ($p_1$ ,$C_{1i}$)
$p_{r1} \leq p_1$ / $p_{r1} > p_1$ → create flowID entry in $L_1$ and store

**BB3** (sampling): selects uplink flows that have a very high CET

is SYN in uplink? — no → is ACK in uplink? — no →
is SYN in uplink? — yes → cache in $ChT_{flowID}$ → create/update flowID entry in $L_2$
is ACK in uplink? — yes → $CET_{flowID} = TS_{ACK} - TS_{SYN}$ → delete flowID entry from $L_2$
→ sampling ($p_2$ ,$CET_{flowID}$)
$p_{r2} \leq p_2$ / $p_{r2} > p_2$ → create flowID entry in $L_1$, flush $ChT_{flowID}$ and store

**BB4** (sampling): selects flows whose size has to be measured

is SYN or SYN-ACK? — no → discard
is SYN or SYN-ACK? — yes → sampling ($p_3$)
$p_{c3} \leq p_3$ / $p_{c3} > p_3$ → create flowID entry in $L_3$ and cache in $ChL_{flowID}$

**BB5** (filtering and sampling): selects large flows to be stored completely or to be packet sampled

increase $C_{2i}$ → is $C_{2i} < T$? — yes → cache in $ChL_{flowID}$
is $C_{2i} < T$? — no → cache in $ChL_{flowID}$ → sampling ($p_4$)
$p_{c4} \leq p_4$ → create flowID entry in $L_1$, flush T packets in $ChL_{flowID}$ and store
$p_{c4} > p_4$ → create flowID entry in $L_4$, flush T x $p_5$ packets in $ChL_{flowID}$ and store

**Fig.1**

EP 2 544 407 A1

15

**BB1** (filtering): discards non-TCP packets, forwards the rest to be stored or to another BB

packet of flow i / mIP i

is TCP? — yes → is flowID in $L_1$? — no → is flowID in $L_2$? — no → is flowID in $L_3$? — yes → is flowID in $L_4$? — yes → to BB6

is TCP? — no → discard

is flowID in $L_1$? — yes → store

is flowID in $L_2$? — yes → to BB3

is flowID in $L_3$? — no → to BB2

is flowID in $L_4$? — no → to BB5

## Fig.2

**BB2** (sampling): selects flows associated with very active mIPs

from BB1 → is SYN in uplink? — no → is SYN-ACK in downlink? — no → to BB3

is SYN in uplink? — yes ↓

is SYN-ACK in downlink? — yes ↓

is flowID in $L_5$? — no → create flowID entry in $L_5$

is flowID in $L_5$? — yes ↓

decrease $C_{1i}$ for inactivity ← increase $C_{1i}$

create flowID entry in $L_5$ → increase $C_{1i}$

decrease $C_{1i}$ for inactivity ↓

sampling $(p_1, C_{1i})$ — $p_{r1} > p_1$ to BB3

sampling $(p_1, C_{1i})$ — $p_{r1} \leq p_1$ ↓

**create flowID entry in $L_1$ and store**

## Fig.3

$$p_1(x) = \begin{cases} 0 & , \text{if } x \leq NFL_{LB} \\ \dfrac{x - NFL_{LB}}{NFL_{UB} - NFL_{LB}} & , \text{if } NFL_{LB} < x < NFL_{UB} \\ 1 & , \text{if } x \geq NFL_{UB} \end{cases}$$

$p_1(x)$

1

0

$NFL_{LB}$   $NFL_{UB}$   NFL

## Fig.4

**Fig.5**

$$p_2(x) = \begin{cases} 0 & \text{, if } x \le CET_{LB} \\ \dfrac{x - CET_{LB}}{CET_{UB} - CET_{LB}} & \text{, if } CET_{LB} < x < CET_{UB} \\ 1 & \text{, if } x \ge CET_{UB} \end{cases}$$

**Fig.6**

**Fig.7**

**BB5** (filtering and sampling): selects large flows to be stored completely or to be packet sampled

from BB1

increase $C_{2i}$

is $C_{2i} < T$?

yes → cache in $ChL_{flowID}$

no

cache in $ChL_{flowID}$

sampling ($p_4$)

$p_{c4} \leq p_4$

*create flowID entry in $L_1$, flush T packets in $ChL_{flowID}$ and store*

$p_{c4} > p_4$

*create flowID entry in $L_4$, flush T x $p_5$ packets in $ChL_{flowID}$ and store*

# Fig.8

**BB6** (sampling): select a (small) fraction of the packets of the total number of packets of a large flow

from BB1

increase $C_{3i}$

sampling ($p_5$,[$C_{3i}$])

$p_{r5} \leq p_5$

$p_{r5} > p_5$

store

discard

# Fig.9

Europäisches
Patentamt

European
Patent Office

Office européen
des brevets

**EUROPEAN SEARCH REPORT**

Application Number

EP 11 17 2803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUFFIELD ED AT(OEB_ENTITY_AMPERSAND)AMP N ET AL: "A Framework for Packet Selection and Reporting; rfc5474.txt", A FRAMEWORK FOR PACKET SELECTION AND REPORTING; RFC5474.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 2009 (2009-03-01), XP015065543, [retrieved on 2009-04-01] * paragraph [03.1] - paragraph [03.3] * * paragraph [03.7] * * paragraph [05.1] - paragraph [05.2] * * paragraph [05.5] - paragraph [06.2] * * paragraph [0007] - paragraph [0008] * * paragraph [08.4] - paragraph [08.8] * * paragraph [11.1] - paragraph [11.4] * ----- | 1-22 | INV. H04L12/26 |
| A | ZSEBY FRAUNHOFER FOKUS M MOLINA DANTE N DUFFIELD AT(OEB_ENTITY_AMPERSAND)AMP T ET AL: "Sampling and Filtering Techniques for IP Packet Selection; rfc5475.txt", SAMPLING AND FILTERING TECHNIQUES FOR IP PACKET SELECTION; RFC5475.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 2009 (2009-03-01), XP015065544, [retrieved on 2009-04-01] * paragraph [03.2] - paragraph [05.1] * * paragraph [0006] * * paragraph [0007] - paragraph [08.2] * ----- -/-- | 1-22 | TECHNICAL FIELDS SEARCHED (IPC) H04L |

The present search report has been drawn up for all claims

| Place of search | Date of completion of the search | Examiner |
|---|---|---|
| Berlin | 6 December 2011 | Siebel, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 17 2803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CASTRO H ET AL:   "Monitoring emerging IPv6 wireless access networks", IEEE WIRELESS COMMUNICATIONS, IEEE SERVICE CENTER, PISCATAWAY, NJ, US, vol. 12, no. 1, 1 February 2005 (2005-02-01), pages 47-53, XP011127719, ISSN: 1536-1284, DOI: 10.1109/MWC.2005.1404572 | 1,22 | |
| A | * the whole document * | 2-21 | |
| A | PELUSO UNIVERSITY OF NAPOLI T ZSEBY FRAUNHOFER INSTITUTE FOKUS S D'ANTONIO CINI CONSORTIUM/UNIVERSITY OF NAPOLI PARTHENOPE M MOLIN:   "Flow Selection Techniques; draft-ietf-ipfix-flow-selection-tech-01.txt", FLOW SELECTION TECHNIQUES; DRAFT-IETF-IPFIX-FLOW-SELECTION-TECH-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 7 March 2010 (2010-03-07), pages 1-24, XP015067766, [retrieved on 2010-03-07] * the whole document * | 1-22 | **TECHNICAL FIELDS SEARCHED (IPC)** |

-/--

The present search report has been drawn up for all claims

| Place of search | Date of completion of the search | Examiner |
|---|---|---|
| Berlin | 6 December 2011 | Siebel, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 11 17 2803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CLAISE CISCO SYSTEMS B:  "Packet Sampling (PSAMP) Protocol Specifications; draft-ietf-psamp-protocol-03.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, vol. psamp, no. 3, 1 October 2005 (2005-10-01), XP015044013, ISSN: 0000-0004 * the whole document * ----- | 1-22 | |
| A | US 2007/041331 A1 (MA XIAOXUE [US] ET AL) 22 February 2007 (2007-02-22) * paragraph [0003] - paragraph [0010] * * paragraph [0025] - paragraph [0026] * * paragraph [0038] - paragraph [0039] * ----- | 1-22 | |
| | | | TECHNICAL FIELDS SEARCHED (IPC) |

The present search report has been drawn up for all claims

| Place of search | Date of completion of the search | Examiner |
|---|---|---|
| Berlin | 6 December 2011 | Siebel, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .....................................................................................................................
& : member of the same patent family, corresponding
    document

EPO FORM 1503 03.82 (P04C01)

EP 2 544 407 A1

## ANNEX TO THE EUROPEAN SEARCH REPORT
## ON EUROPEAN PATENT APPLICATION NO.

EP 11 17 2803

06-12-2011

| Patent document cited in search report | Publication date | Patent family member(s) | Publication date |
|---|---|---|---|
| US 2007041331 A1 | 22-02-2007 | NONE | |

EPO FORM P0459

**EP 2 544 407 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. JENKINS.** *A Hash Function for Hash Table Lookup,* 26 January 2011, http://www.burtleburtle.net/bob/hash/doobs.html
- Empirical evaluation of hash functions for multipoint measurements. **C. HENKE ; C. SCHMOLL ; T. ZSEBY.** SIGCOMM Computer Communication Review. ACM, 2008, vol. 38, 39-50

- **A. KUMAR ; J. XU.** Sketch Guided Sampling — Using On-Line Estimates of Flow Size for Adaptive Data Collection. *Proceedings of IEEE INFOCOM, IEEE,* 2006